# EUROPEAN PATENT APPLICATION

(11) **EP 4 105 444 A1**
(43) Date of publication of application: **21.12.2022**
(21) Application number: 22179744.2
(22) Date of filing: 17.06.2022
(51) Int. Cl.: F01D 5/28, B22F 3/105, F01D 9/04, F01D 11/00, B23P 15/04

(54) **JOINING INDIVIDUAL TURBINE VANES WITH FIELD ASSISTED SINTERING TECHNOLOGY (FAST)**

(30) Priority: 18.06.2021 US 202163212325 P; 13.08.2021 US 202163232974 P
(71) Applicant: Raytheon Technologies Corporation, Farmington, CT 06032 (US)
(72) Inventor: FARRIS, John R., Lebanon, 06249 (US); SHARON, John A., West Hartford, 06119 (US)
(74) Representative: Dehns

(57) **Abstract**

A method of joining first and second turbine vanes (210, 220) is provided. The method includes casting and machining each of the first and second turbine vanes (210, 220), coating each of the first and second turbine vanes (210, 220) with thermal barrier coating (TBC) (214, 224) and executing field assisted sintering technology (FAST) processing to join the first and second turbine vanes (210, 220).

## Description

### BACKGROUND

The present disclosure relates to gas turbine engines and, more particularly, to a method of joining individual turbine vanes of a gas turbine engine with field assisted sintering technology (FAST).

In a gas turbine engine, turbine vanes interact with high pressure and high temperature gases within a turbine section in order to direct the flow of those high pressure and high temperature gases. Those turbine vanes, especially those turbine vanes in high temperature locations, can be provided as doublets or singlets. Singlets have the benefit of providing good thermal barrier coating (TBC) coverage but they tend to cost more and exhibit leakage. Doublets tend to exhibit worse TBC coverage due to hidden line-of-sight surfaces but have reduced leakage and lower costs.

Accordingly, a need exists for a production method that allows for the formation of a turbine vane doublet that exhibits good TBC coverage without sacrificing leakage and without increased costs.

### BRIEF DESCRIPTION

According to an aspect of the disclosure, a method of joining first and second turbine vanes is provided. The method includes casting and machining each of the first and second turbine vanes, coating each of the first and second turbine vanes with thermal barrier coating (TBC) and executing field assisted sintering technology (FAST) processing to join the first and second turbine vanes.

In accordance with additional or alternative embodiments, the first and second turbine vanes are joined to form a doublet.

In accordance with additional or alternative embodiments, the casting and machining, the coating and the executing of the FAST processing are repeated to join at least one or more additional turbine vanes to at least the doublet.

In accordance with additional or alternative embodiments, the method further includes drilling holes into each of the first and second turbine vanes before or after the coating.

In accordance with additional or alternative embodiments, each of the first and second turbine vanes includes an inner platform, an outer platform and an airfoil section radially interposed between the inner and outer platforms and the executing of the FAST processing includes executing the FAST processing to join the respective inner platforms of the first and second turbine vanes and to join the respective outer platforms of the first and second turbine vanes.

In accordance with additional or alternative embodiments, each of the first and second turbine vanes includes an inner platform, an outer platform and an airfoil section radially interposed between the inner and outer platforms and the executing of the FAST processing includes executing the FAST processing to join the respective inner platforms of the first and second turbine vanes.

In accordance with additional or alternative embodiments, opposed surfaces of the respective outer platforms of the first and second turbine vanes define partial-cavities, the method further includes interposing feather seal between the partial-cavities and the executing of the FAST processing to join the respective inner platforms of the first and second turbine vanes includes combining the partial-cavities into a single cavity and trapping the feather seal in the single cavity.

In accordance with additional or alternative embodiments, each of the first and second turbine vanes includes an inner platform, an outer platform and an airfoil section radially interposed between the inner and outer platforms and the executing of the FAST processing includes executing the FAST processing to join the respective outer platforms of the first and second turbine vanes.

In accordance with additional or alternative embodiments, opposed surfaces of the respective inner platforms of the first and second turbine vanes define partial-cavities, the method further includes interposing feather seal between the partial-cavities and the executing of the FAST processing to join the respective outer platforms of the first and second turbine vanes includes combining the partial-cavities into a single cavity and trapping the feather seal in the single cavity.

According to an aspect of the disclosure, a method of joining first and second turbine vane singlets is provided. The method includes casting and machining each of the first and second turbine vane singlets, coating each of the first and second turbine vane singlets with thermal barrier coating (TBC) and executing field assisted sintering technology (FAST) processing to join the first and second turbine vane singlets to form a turbine vane doublet.

In accordance with additional or alternative embodiments, the casting and machining, the coating and the executing of the FAST processing are repeated to join at least one or more additional turbine vane singlets to at least the turbine vane doublet.

In accordance with additional or alternative embodiments, the method further includes drilling holes into each of the first and second turbine vane singlets before or after the coating.

In accordance with additional or alternative embodiments, each of the first and second turbine vane singlets includes an inner platform, an outer platform and an airfoil section radially interposed between the inner and outer platforms and the executing of the FAST processing includes executing the FAST processing to join the respective inner platforms of the first and second turbine vane singlets and to join the respective outer platforms of the first and second turbine vane singlets.

In accordance with additional or alternative embodiments, each of the first and second turbine vane singlets includes an inner platform, an outer platform and an airfoil section radially interposed between the inner and outer platforms and the executing of the FAST processing includes executing the FAST processing to join the respective inner platforms of the first and second turbine vane singlets.

In accordance with additional or alternative embodiments, opposed surfaces of the respective outer platforms of the first and second turbine vane singlets define partial-cavities, the method further includes interposing feather seal between the partial-cavities and the executing of the FAST processing to join the respective inner platforms of the first and second turbine vane singlets includes combining the partial-cavities into a single cavity and trapping the feather seal in the single cavity.

In accordance with additional or alternative embodiments, each of the first and second turbine vane singlets includes an inner platform, an outer platform and an airfoil section radially interposed between the inner and outer platforms and the executing of the FAST processing includes executing the FAST processing to join the respective outer platforms of the first and second turbine vane singlets.

In accordance with additional or alternative embodiments, opposed surfaces of the respective inner platforms of the first and second turbine vane singlets define partial-cavities, the method further includes interposing feather seal between the partial-cavities and the executing of the FAST processing to join the respective outer platforms of the first and second turbine vane singlets includes combining the partial-cavities into a single cavity and trapping the feather seal in the single cavity.

According to an aspect of the disclosure, an assembly of at least turbine vane singlets is provided and includes first and second turbine vane singlets. Each of the first and second turbine vane singlets is separately coated with a thermal barrier coating. Each of the first and second turbine vane singlets includes an inner platform, an outer platform and an airfoil section radially interposed between the inner and outer platforms. The first and second turbine vane singlets are joined by field assisted sintering technology (FAST) processing along a bond line at one or more of the respective inner platforms and the respective outer platforms to form a turbine vane doublet.

In accordance with additional or alternative embodiments, at least one or more additional turbine vane singlets are joined by the FAST processing to at least the turbine vane doublet.

In accordance with additional or alternative embodiments, opposed surfaces of the respective inner platforms of the first and second turbine vane singlets define partial-cavities and the respective outer platforms of the first and second turbine vane singlets are joined by the FAST processing to combine the partial-cavities into a single cavity with feather seal trapped therein or opposed surfaces of the respective outer platforms of the first and second turbine vane singlets define partial-cavities and the respective inner platforms of the first and second turbine vane singlets are joined by the FAST processing to combine the partial-cavities into a single cavity with feather seal trapped therein.

Additional features and advantages are realized through the techniques of the present disclosure. Other embodiments and aspects of the disclosure are described in detail herein and are considered a part of the claimed technical concept. For a better understanding of the disclosure with the advantages and the features, refer to the description and to the drawings.

### BRIEF DESCRIPTION OF THE DRAWINGS

For a more complete understanding of this disclosure, reference is now made to the following brief description, taken in connection with the accompanying drawings and detailed description, wherein like reference numerals represent like parts:
FIG. 1 is a partial cross-sectional view of a gas turbine engine in accordance with embodiments;
FIG. 2 is a side view of an illustration of a joining of first and second turbine vane singlets into a doublet by FAST processing in accordance with embodiments;
FIG. 3 is a side view of an illustration of a joining of first and second turbine vane singlets into a doublet by FAST processing with intervening feather seal in accordance with embodiments; and
FIG. 4 is a flow diagram illustrating a method of joining first and second turbine vane singlets in accordance with embodiments.

### DETAILED DESCRIPTION

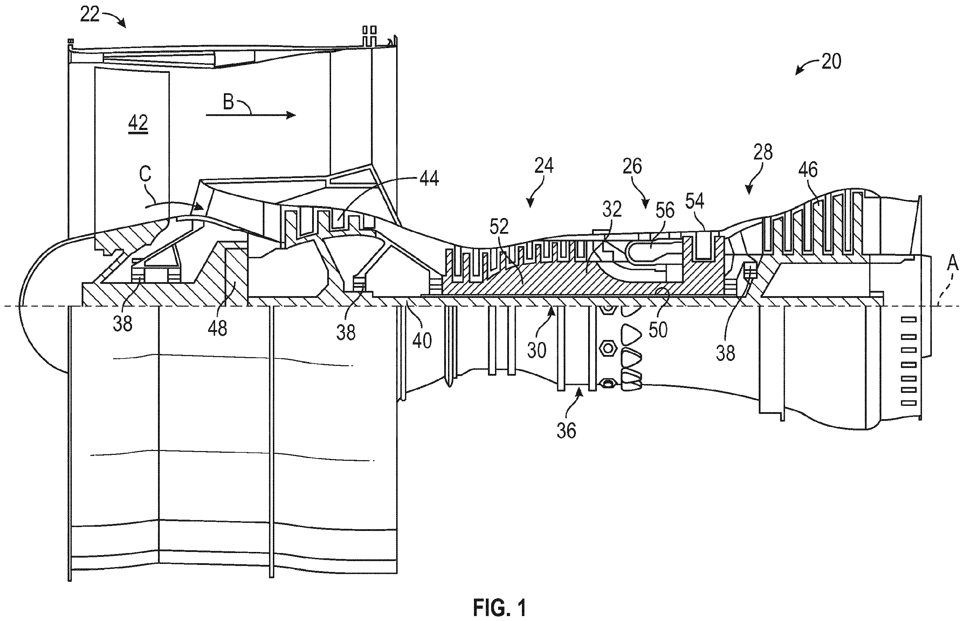

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include other systems or features. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

Field assisted sintering technology (FAST) and spark plasma sintering (SPS) are consolidation processes that are executed at temperatures lower than the melting point of the subject materials. Similar to hot pressing, FAST forms bonds between materials but at temperatures ∼200°C lower. FAST utilizes a high amperage pulsed direct current (DC) electrical current to heat the subject materials to be bonded through Joule heating while under uniaxial compression. The consolidation is a combination of solid-state transport mechanisms including primarily diffusion and creep. The result is a metallurgical bond between the materials to be joined. Consolidation or joining can be accomplished in a variety of conductive and non-conductive materials and forms.

Recently, FAST/SPS has been gaining acceptance starting in the 1990s for consolidation of powder materials into dense compacts with significantly greater efficiency than hot pressing. Due to the lower processing temperatures of FAST/SPS over other consolidation methods, FAST/SPS mitigates significant grain growth common in other diffusional bonding methods. In some cases, bonding two dense metallic materials using the FAST process has been demonstrated. Material pairs included a same alloy (e.g., PWA 1429) and dissimilar alloys (e.g., PWA 1429 to CM247). Additionally, the ability to bond both single crystal (SX) and equiaxed (EQ) materials and the ability to retain fine features along bond surfaces or lines have been demonstrated.

As will be described below, FAST processing is employed to join turbine vanes in singlet form together to form turbine vane doublets. Additional FAST processing can be used to form turbine vane triplets, quadlets, etc. Initially, at least first and second turbine vane singlets are cast and machined, with holes drilled and surfaces coating with TBC. The first and second turbine vane singlets are then joined by FAST processing to form a turbine vane doublet with the TBC benefits of the turbine vane singlets.

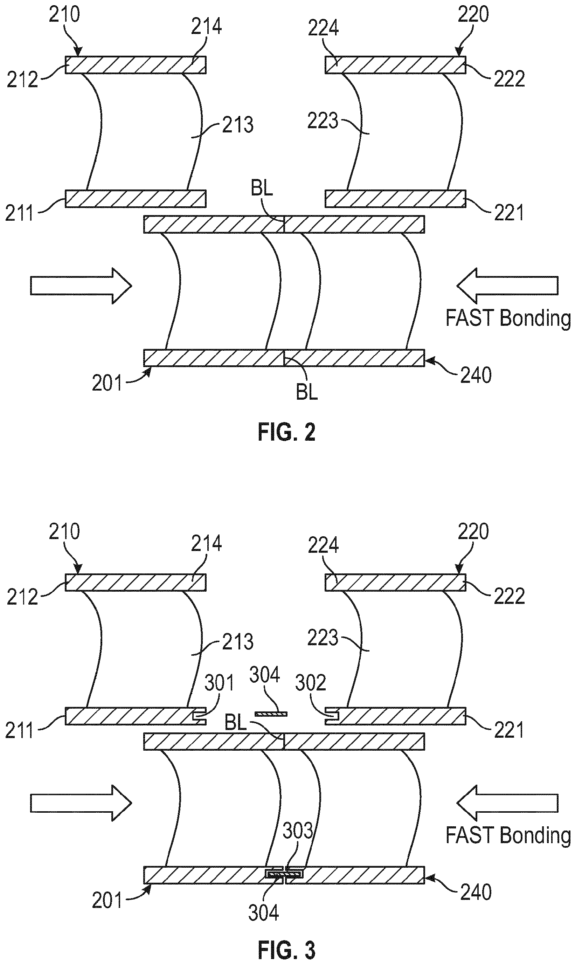

With reference to FIG. 2, an assembly 201 of at least turbine vane singlets is provided and includes a first turbine vane singlet 210 and a second turbine vane singlet 220. The first and second turbine vane singlets 210 and 220 are each operable in at least the high pressure turbine 54 of FIG. 1. The first turbine vane singlet 210 includes an inner platform 211, an outer platform 212 and an airfoil section 213 that is radially interposed between the inner platform 211 and the outer platform 212. TBC 214 can be provided to coat exterior surfaces of at least one or more of the inner platform 211, the outer platform 212 and the airfoil section 213. Various holes for cooling flows and other applications can be drilled into the first turbine vane singlet 210 before or after coating by the TBC 214. The second turbine vane singlet 220 includes an inner platform 221, an outer platform 222 and an airfoil section 223 that is radially interposed between the inner platform 221 and the outer platform 222. TBC 224 can be provided to coat exterior surfaces of at least one or more of the inner platform 221, the outer platform 222 and the airfoil section 223. Various holes for cooling flows and other applications can be drilled into the second turbine vane singlet 220 before or after coating by the TBC 224. The first and second turbine vane singlets 210 and 220 are joined by field assisted sintering technology (FAST) processing along a bond line BL at corresponding opposed surfaces of one or more of the respective inner platforms 211 and 221 and the respective outer platforms 212 and 222 to form a turbine vane doublet 240.

It is to be understood that, in accordance with further embodiments, at least one or more additional turbine vane singlets can be joined by the FAST processing to at least the turbine vane doublet 240.

It is also to be understood that the bond line BL can be formed at corresponding surfaces of both the respective inner platforms 211 and 221 and the respective outer platforms 212 and 222, at corresponding surfaces of the respective inner platforms 211 and 221 or at corresponding surfaces of the respective outer platforms 212 and 222.

For example, with reference to FIG. 3, the bond line BL is formed at corresponding surfaces of the respective outer platforms 212 and 222. In this case, opposed surfaces of the respective inner platforms 211 and 221 of the first and second turbine vane singlets 210 and 220 define partial-cavities 301 and 302. Here, the joining of the respective outer platforms 212 and 222 of the first and second turbine vane singlets 210 and 220 by the FAST processing effectively combine the partial-cavities 310 and 302 into a single cavity 303 with feather seal 304 trapped in the single cavity 303.

The opposite configuration from the one illustrated in FIG. 3 will be apparent to one of ordinary skill in the art and need not be illustrated or described further.

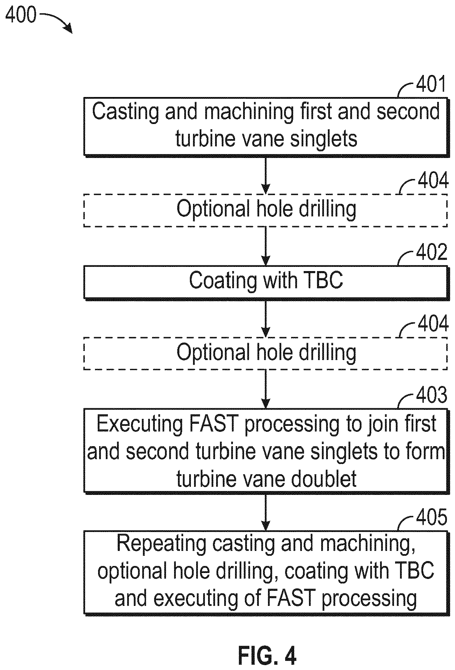

With reference to FIG. 4, a method 400 of joining first and second turbine vane singlets as described above is provided. As shown in FIG. 4, the method includes casting and machining each of the first and second turbine vane singlets (401), coating each of the first and second turbine vane singlets with TBC (402) and executing FAST processing to join the first and second turbine vane singlets to form a turbine vane doublet (403). In accordance with further embodiments, the method 400 can further include drilling holes into each of the first and second turbine vane singlets before or after the coating (404) and repeating at least the casting and machining of operation 401, the coating of operation 402 and the executing of the FAST processing of operation 403 to join at least one or more additional turbine vane singlets to at least the turbine vane doublet (405).

In accordance with embodiments, each of the first and second turbine vane singlets can include an inner platform, an outer platform and an airfoil section radially interposed between the inner and outer platforms. In these or other cases, the executing of the FAST processing of operation 403 can include executing the FAST processing to join the respective inner platforms of the first and second turbine vane singlets and to join the respective outer platforms of the first and second turbine vane singlets.

In accordance with alternative embodiments, the executing of the FAST processing of operation 403 can include executing the FAST processing to join the respective inner platforms of the first and second turbine vane singlets. In these or other cases, opposed surfaces of the respective outer platforms of the first and second turbine vane singlets can be formed to define partial-cavities and the method can further include interposing feather seal between the partial-cavities (see FIG. 3 and the accompanying text above). Here, as explained above, the executing of the FAST processing to join the respective inner platforms of the first and second turbine vane singlets can include combining the partial-cavities into a single cavity and trapping the feather seal in the single cavity.

In accordance with alternative embodiments, the executing of the FAST processing of operation 403 can include executing the FAST processing to join the respective outer platforms of the first and second turbine vane singlets. In these or other cases, opposed surfaces of the respective inner platforms of the first and second turbine vane singlets can be formed to define partial-cavities and the method can further include interposing feather seal between the partial-cavities (see FIG. 3 and the accompanying text above). Here, as explained above, the executing of the FAST processing to join the respective outer platforms of the first and second turbine vane singlets can include combining the partial-cavities into a single cavity and trapping the feather seal in the single cavity.

In an embodiment, a first alloy for use in the methods and assemblies described herein may be a "high strength" metal alloy. Examples of the first alloy include PWA 1429, René N5, CMSX-4, CMSX-10, TMS-138 or TMS-162. The metal alloys are nickel-based metals that in addition to nickel comprise one or more of chromium, cobalt, molybdenum, aluminum, titanium, tantalum, niobium, ruthenium, rhenium, boron and carbon. The metal alloys contain one or more of the following metals in addition to nickel - 2 to 10 wt% of chromium, 2 to 11 wt% of cobalt, 0.5 to 5 wt% molybdenum, 4 to 7.5 wt% of tungsten, 3 - 7 wt% of aluminum, 0 to 5 wt% of titanium, 3 to 10 wt% of tantalum and 2 - 8 wt% of rhenium. The metal alloys may also contain ruthenium, carbon and boron.

The composition of these alloys is defined to maximize mechanical properties in a single crystal form while maintaining an adequate level of environmental resistance. Table 1 and Table 2 shows preferred ranges (of the ingredients) for the compositions (in weight percent) that may be used for the first alloy. Table 2 contains broader ranges for some of the alloys (than those indicated in Table 1) that may be used in the first portion.

**Table 1. Composition of cast superalloys.**

| Class | | Alloy | Compositions (wt.%) | | | | | | | | | | | | | | |
|---|---|---|---|---|---|---|---|---|---|---|---|---|---|---|---|---|---|
| | | | Cr | Co | Mo | W | Al | Ti | Ta | Nb | Re | Ru | Hf | C | B | Zr | Ni |
| Conventional Cast (CC) | | IN-713LC | 12 | - | 4.5 | - | 5.9 | 0.6 | - | 2 | - | - | - | 0.05 | 0.01 | 0.1 | Bal |
| | | IN-738LC | 16 | 8.5 | 1.75 | 2.6 | 3.4 | 3.4 | 1.75 | 0.9 | - | - | - | 0.11 | 0.01 | 0.04 | Bal |
| | | Rene 80 | 14 | 9 | 4 | 4 | 3 | 4.7 | - | - | - | - | 0.8 | 0.16 | 0.015 | 0.01 | Bal |
| | | Mar-M247 | 8 | 10 | 0.6 | 10 | 5.5 | 1 | 3 | - | - | - | 1.5 | 0.15 | 0.015 | 0.03 | Bal |
| DS | 1s1 | Mar-M200Hf | 8 | 9 | | 12 | 5 | 1.9 | - | 1 | - | - | 2 | 0.13 | 0.015 | 0.03 | Bal |
| | | CM247LC | 8.1 | 9.2 | 0.5 | 9.5 | 5.6 | 0.7 | 3.2 | - | - | - | 1.4 | 0.07 | 0.015 | 0.007 | Bal |
| | 2nd | CM186LC | 6 | 9.3 | 0.5 | 8.4 | 5.7 | 0.7 | 3.4 | - | 3.0 | - | 1.4 | 0.07 | 0.015 | 0.005 | Bal |
| | | PWA1426 | 6.5 | 10 | 17 | 6.5 | 6 | - | 4 | - | 3.0 | - | 1.5 | 01 | 0.015 | 0.1 | Bal |
| SC | 1st | CMSX-2 | 8 | 5 | 06 | 8 | 5.6 | 1 | 6 | - | - | - | - | - | - | - | Bal |
| | | PWA1480 | 10 | 5 | - | 4 | 5 | 1.5 | 12 | - | - | - | - | - | - | - | Bal |
| | | René N4 | 9 | 8 | 2 | 6 | 3.7 | 4.2 | 4 | 0.5 | - | - | - | - | - | - | Bal |
| | | AMI | 7 | 8 | 2 | 5 | 5 | 1.8 | 8 | 1 | - | - | - | - | - | - | Bal |
| | | RR2000 | 10 | 15 | 3 | - | 5.5 | 4 | - | - | - | - | - | - | - | - | Bal |
| | 2nd | CMSX-4 | 6.5 | 9.6 | 0.6 | 6.4 | 5.6 | 1 | 6.5 | - | 3 | - | 0.1 | - | - | - | Bal |
| | | PWA1484 | 5 | 10 | 2 | 6 | 5.6 | - | 9 | - | 3 | - | 0.1 | - | - | - | Bal |
| | | René N5 | 7 | 8 | 2 | 5 | 6.2 | - | 7 | - | 3 | - | 0.2 | - | - | - | Bal |
| | 3rd | CMSX-10 | 2 | 3 | 0.4 | 5 | 5.7 | 0.2 | 8 | - | 6 | - | 0.03 | - | - | - | Bal |
| | 4th | TMS-138 | 2.9 | 5.9 | 2.9 | 5.9 | 5.9 | - | 5.6 | - | 4.9 | 2 | 0.1 | - | - | - | Bal |
| | 5th | TMS-162 | 2.9 | 5.8 | 3.9 | 5.8 | 5.8 | - | 5.6 | - | 4.9 | 6 | 0.09 | - | - | - | Bal |
| | Re-free | CMSX-7 | 6 | 10 | 0.6 | 9 | 5.7 | 0.8 | 9 | - | - | - | 0.2 | - | - | - | Bal |
| | Low Re | CMSX-8 | 5.4 | 10 | 0.6 | 8 | 5.7 | 0.7 | 8 | - | 1.5 | | 0.1 | - | - | - | Bal |

**Table 2**

| | Cr | Co | Mo | w | Al | Ti | Ta | Nb | Re | Ni |
|---|---|---|---|---|---|---|---|---|---|---|
| PWA1429 | 5-7 | 9-11 | 1.5-2.5 | 5.5-7.5 | 5-7 | - | 3-10 | - | 2-4 | balance |
| René N5 | 6-10 | 7-9 | 1.5-2.5 | 4-7 | 3-7 | 0-5 | 3-8 | 0-1 | 0-4 | balance |
| CMSX-4 | 4-8 | 7-10 | 0.5-1.5 | 5.5-7.5 | 5-6 | 0-2 | 5-8 | - | 2-4 | balance |
| CMSX-10 | 1-3 | 2-4 | 0.1-1 | 4-6 | 5-7 | 0.1-0.4 | 6-10 | | 4-8 | balance |
| TMS-138 | 2-4 | 3.5-6.5 | 2-4 | 5-7 | 5-7 | - | 5-7 | | 4-6 | balance |
| TMS-162 | 2-4 | 3.5-6.5 | 3-5 | 5-7 | 5-7 | - | 5-7 | | 5-7 | balance |

The high strength alloys can withstand stresses of greater than 800 MPa at temperatures greater than 600°C and stresses of greater than 200 MPa at temperatures of greater than 800°C.

Second alloys for use in the methods and assemblies described herein are selected for their ability to handle harsh environmental conditions and can include René 195 and René N2. These compositions were developed with an eye to improved environmental resistance. This can be seen in the Al and Cr levels as compared with Re, W, Mo shown in the Table 3. The cobalt to chromium ratios are lower for the second alloys, while the aluminum to cobalt ratio is much higher for the second alloys when compared with the first alloys.

The second alloys can be a nickel-based alloy that in addition to nickel includes one or more of chromium, cobalt, molybdenum, aluminum, titanium, tantalum, niobium, ruthenium, rhenium, boron and carbon. The metal alloys contain one or more of the following metals in addition to nickel - 7 to 14 wt% of chromium, 3 to 9 wt% of cobalt, 0.1 to 0.2 wt% molybdenum, 3 to 5 wt% of tungsten, 6 - 9 wt% of aluminum, 0 to 5 wt% of titanium, 4 to 6 wt% of tantalum, 0.1 to 0.2 wt% f hafnium and 1 - 2 wt% of rhenium. The metal alloys may also contain ruthenium, carbon and boron.

**Table 3**

| | Cr | Co | Al | Ta | Mo | w | Re | Hf | Ni |
|---|---|---|---|---|---|---|---|---|---|
| René 195 | 7-9 | 3-4 | 7-9 | 5-6 | 0.1-0.2 | 3-5 | 1-2 | 0.1-0.2 | balance |
| René N2 | 12-14 | 7-9 | 6-8 | 4-6 | | 3-4 | 1-2 | 0.1-0.2 | balance |

The high strength alloys used in the second alloys can withstand stresses of at least 50% of the first alloys. In an embodiment, the high strength alloys used in the second alloys are environmentally resistant and withstand temperatures of greater than 1200°C (under oxidation conditions) while undergoing less than 0.05 grams of weight loss per unit weight.

Technical effects and benefits of the present disclosure are the provision of a method to fabricate a turbine vane singlet through machining, hole drilling and TBC coating followed by FAST bonding of two turbine vane singlets together to form a turbine vane doublet. This allows for the obtaining of reduced leakage characteristics of a turbine vane doublet with the improved hole drilling and TBC coating of a turbine vane singlet.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to the technical concepts in the form disclosed. Many modifications and variations will be apparent to those of ordinary skill in the art without departing from the scope and spirit of the disclosure. The embodiments were chosen and described in order to best explain the principles of the disclosure and the practical application, and to enable others of ordinary skill in the art to understand the disclosure for various embodiments with various modifications as are suited to the particular use contemplated.

While the preferred embodiments to the disclosure have been described, it will be understood that those skilled in the art, both now and in the future, may make various improvements and enhancements which fall within the scope of the claims which follow. These claims should be construed to maintain the proper protection for the disclosure first described.

## Claims

1. A method of joining first and second turbine vanes (210, 220), the method comprising:
casting and machining each of the first and second turbine vanes (210, 220);
coating each of the first and second turbine vanes (210, 220) with thermal barrier coating (TBC) (214, 224); and
executing field assisted sintering technology (FAST) processing to join the first and second turbine vanes (210, 220).

2. The method according to claim 1, wherein the first and second turbine vanes (210, 220) are joined to form a doublet (240).

3. The method according to claim 2, wherein the casting and machining, the coating and the executing of the FAST processing are repeated to join at least one or more additional turbine vanes to at least the doublet (240).

4. The method according to any preceding claim, further comprising drilling holes into each of the first and second turbine vanes (210, 220) before or after the coating.

5. The method according to any preceding claim, wherein:
each of the first and second turbine vanes (210, 220) comprises an inner platform (211, 221), an outer platform (212, 222) and an airfoil section (213, 223) radially interposed between the inner and outer platforms (211, 221, 212, 222), and
the executing of the FAST processing comprises executing the FAST processing to join the respective inner platforms (211, 221) of the first and second turbine vanes (210, 220) and to join the respective outer platforms (212, 222) of the first and second turbine vanes (210, 220).

6. The method according to any of claims 1 to 4, wherein:
each of the first and second turbine vanes (210, 220) comprises an inner platform (211, 221), an outer platform (212, 222) and an airfoil section (213, 223) radially interposed between the inner and outer platforms (211, 221, 212, 222), and
the executing of the FAST processing comprises executing the FAST processing to join the respective inner platforms (211, 221) of the first and second turbine vanes (210, 220).

7. The method according to claim 6, wherein:
opposed surfaces of the respective outer platforms (212, 222) of the first and second turbine vanes (210, 220) define partial-cavities (301, 302),
the method further comprises interposing feather seal (304) between the partial-cavities (301, 302), and
the executing of the FAST processing to join the respective inner platforms (211, 221) of the first and second turbine vanes (210, 220) comprises combining the partial-cavities (301, 302) into a single cavity (303) and trapping the feather seal (304) in the single cavity (303).

8. The method according to any of claims 1 to 4, wherein:
each of the first and second turbine vanes (210, 220) comprises an inner platform (211, 221), an outer platform (212, 222) and an airfoil section (213, 223) radially interposed between the inner and outer platforms (211, 221, 212, 222), and
the executing of the FAST processing comprises executing the FAST processing to join the respective outer platforms (212, 222) of the first and second turbine vanes (210, 220).

9. The method according to claim 8, wherein:
opposed surfaces of the respective inner platforms (211, 221) of the first and second turbine vanes (210, 220) define partial-cavities (301, 302),
the method further comprises interposing feather seal (304) between the partial-cavities (301, 302), and
the executing of the FAST processing to join the respective outer platforms (212, 222) of the first and second turbine vanes (210, 220) comprises combining the partial-cavities (301, 302) into a single cavity (303) and trapping the feather seal (304) in the single cavity (303).

10. An assembly (201) of at least turbine vane singlets, comprising:
first and second turbine vane singlets (210, 220),
each of the first and second turbine vane singlets (210, 220) being separately coated with a thermal barrier coating (214, 224),
each of the first and second turbine vane singlets (210, 220) comprising an inner platform (211, 221), an outer platform (212, 222) and an airfoil section (213, 223) radially interposed between the inner and outer platforms (212, 221, 212, 222), and
the first and second turbine vane singlets (210, 220) being joined by field assisted sintering technology (FAST) processing along a bond line (BL) at one or more of the respective inner platforms (211, 221) and the respective outer platforms (212, 222) to form a turbine vane doublet (240).

11. The assembly (201) according to claim 10, wherein at least one or more additional turbine vane singlets are joined by the FAST processing to at least the turbine vane doublet (240).

12. The assembly (201) according to claim 10 or 11, wherein:
opposed surfaces of the respective inner platforms (211, 221) of the first and second turbine vane singlets (210, 220) define partial-cavities (301, 302) and the respective outer platforms (212, 222) of the first and second turbine vane singlets (210, 220) are joined by the FAST processing to combine the partial-cavities (301, 302) into a single cavity (303) with feather seal (304) trapped therein, or
opposed surfaces of the respective outer platforms (212, 222) of the first and second turbine vane singlets (210, 220) define partial-cavities (301, 302) and the respective inner platforms (211, 221) of the first and second turbine vane singlets (210, 220) are joined by the FAST processing to combine the partial-cavities (301, 302) into a single cavity (303) with feather seal (304) trapped therein.
